Europäisches Patentamt

European Patent Office

Office européen des brevets

(11) Veröffentlichungsnummer: **0 314 030**
**A1**

## (12) EUROPÄISCHE PATENTANMELDUNG

(21) Anmeldenummer: 88117640.8

(22) Anmeldetag: 22.10.88

(51) Int. Cl.4: **C04B 37/02 , H01M 10/39 , H01M 2/08**

(30) Priorität: 30.10.87 DE 3736843

(43) Veröffentlichungstag der Anmeldung:
03.05.89 Patentblatt 89/18

(84) Benannte Vertragsstaaten:
BE DE ES FR GB IT NL SE

(71) Anmelder: **Asea Brown Boveri
Aktiengesellschaft
Kallstadter Strasse 1
D-6800 Mannheim 31(DE)**

(72) Erfinder: **Steinleitner, Günther, Dr.
Pfitzner-Strasse 1
D-6905 Schriesheim(DE)**
Erfinder: **Rozé, Philipp
Ahornweg 13
D-6908 Wiesloch-Baiertal(DE)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1(DE)**

(54) **Verfahren zum Verbinden von metallischen und keramischen Werkstoffen.**

(57) Die Erfindung bezieht sich auf ein Verfahren zum Verbinden von Bauelementen (2, 3) mit keramischen und metallischen Fügeflächen (2F, 3F). Aufgabe der Erfindung ist es, ein Verfahren aufzuzeigen, das trotz metalloxidischer Schichten auf den Fügeflächen (3F) aus Metall oder Metallegierungen eine dauerhafte und vollständige Verbindung mit keramischen Flächen (2F) erlaubt. Erfindungsgemäß wird auf die keramische Fügefläche (2F) vor dem Verbinden ein Überzug (4) aus Glas aufgetragen, wobei das Glas mindestens 5 bis 20 Gew.% $Na_2O$, 30 bis 60 Gew.% $B_2O_3$ und 20 bis 60 Gew.% $SiO_2$ aufweist. Die zu verbindenden Flächen (2F, 3F) der Bauelemente (2,3) werden anschließend bei einer definierten Temperatur und einem vorgegebenen Druck dauerhaft miteinander verbunden.

Fig.1

# Verfahren zum Verbinden von metallischen und keramischen Werkstoffen

Die Erfindung bezieht sich auf ein Verfahren zum Verbinden von keramischen und metallischen Werkstoffen gemäß dem Oberbegriff des Patentanspruches 1.

Werkstoffe aus Metall und Keramik sowie die daraus hergestellten Bauelemente finden in der Technik ein breites Anwendungsgebiet. Diese Werkstoffe werden jedoch nicht nur getrennt voneinander benutzt. Vielmehr besteht sehr häufig die Notwendigkeit, beide Werkstoffe bzw. Bauelemente aus beiden Werkstoffen dauerhaft miteinander zu verbinden. Ein Beispiel hierfür sind Speicherzellen, die einen keramischen Festelektrolyten aufweisen. Um eine Isolierung des Festelektrolyten gegenüber metallischen Bauelementen zu bewirken, ist dieser mit einem Isolierring aus Keramik verbunden, der wiederum zum Verschluß der Speicherzelle mit einem metallischen Bauelement zu verbinden ist.

Aus der DE-OS 3 033 438 ist eine solche elektrochemische Speicherzelle bekannt. Hierbei ist der Isolierring des Festelektrolyten, der aus Alphaaluminiumoxid gefertigt ist, durch Thermokompression über einen Ring aus Aluminium mit dem metallischen Verschlußelement der Speicherzelle verbunden. Nachteilig wirkt sich hierbei die Tatsache aus, daß sich auf metallischen Bauelementen oder Bauelementen aus Metallegierungen, wenn sie nicht aus Gold oder Platin gefertigt sind, unter dem Einfluß von Sauerstoff, wobei schon geringe Mengen ausreichen, eine Oxidschicht ausbildet. Bei Weichmetallen, wie Aluminium und Blei, die insbesondere zur Verbindung von keramischen Bauteilen benutzt werden, ist die Ausbildung einer solchen Oxidschicht besonders ausgeprägt. Beim Verbinden der keramischen und metallischen Bauteile bzw. entsprechender Schichten, die auf Bauteile aus anderen Materialien aufgetragen sind, wird diese Oxidschicht zwar unter dem Einfluß von Druck und Wärme aufgerissen, bleibt jedoch in den Grenzflächen zwischen dem keramischen und metallischen Material erhalten. Hierdurch wird eine zusammenhängende Verbindung der miteinander zu fügenden Flächen verhindert, da in den Bereichen, in denen die Oxidschichten erhalten bleiben, keine Reaktionen zwischen dem metallischen und keramischen Material eintreten. Eine solche Verbindung kann die an sie gestellten Anforderungen, Festigkeit, Dichtigkeit und Korrosionsbeständigkeit betreffend, nicht vollständig erfüllen.

Der Erfindung liegt deshalb die Aufgabe zugrunde, ein Verfahren aufzuzeigen, mit dem keramische und metallische Werkstoffe, bzw. Bauelemente aus diesen Werkstoffen so zusammengefügt werden können, daß sie allen Anforderungen genügen.

Diese Aufgabe wird erfindungsgemäß durch die Merkmale des Patentanspruches 1 gelöst.

Die Anwendung dieses Verfahrens bei der Herstellung einer elektrochemischen Speicherzelle ist in Patentanspruch 6 offenbart.

Durch das Auftragen eines Überzuges aus Glas, der eine definierte Dicke, sowie einen thermischen Dehnungskoeffizienten aufweist, der nur geringfügig von dem thermischen Dehnungskoeffizienten des keramischen Materials abweicht, kann eine Verbindung zwischen keramischen und metallischen Werkstoffen bzw. Bauelementen aus diesen Werkstoffen bewirkt werden, die um das Fünf- bis Zehnfache verbessert ist gegenüber herkömmlichen Verbindungen. Diese Verbindung wird insbesondere dadurch erreicht, daß das sich auf den metallischen Flächen bzw. den Flächen aus Metallegierungen bildende metallische Oxid beim Verbinden der Bauelemente unter Druck und Wärme in das Glas eingelöst wird. Die störenden Oxidschichten, die eine vollständige Verbindung der Flächen aus Keramik und Metall bisher verhindert haben, sind damit beseitigt. Mit dem erfindungsgemäßen Verfahren können Verbindungen hergestellt werden, welche die gewünschte mechanische Festigkeit, sowie die gewünschte Dichte gegenüber Gasen und die notwendige chemische Beständigkeit aufweisen.

Erfindungsgemäß ist es möglich, mit diesem Verfahren den Isolierring eines Festelektrolyten, der zur Trennung der Reaktandenräume in einer Natrium-Schwefel-Speicherzelle angeordnet ist, so mit einem metallischen Verschlußelement zu verbinden, daß ein dauerhafter Verschluß der Speicherzelle über die gesamte Lebensdauer derselben sichergestellt wird.

Der verwendete Überzug aus Glas weist eine Dicke zwischen 0,1 und 100 μm, vorzugsweise zwischen 1 und 10 μm auf. Die Transformationstemperatur des Glases sollte unter der Temperatur liegen, mit der die Bauelemente aus Metall und Keramik verbunden werden. Das Glas wird so gewählt, daß der fertige Überzug einen thermischen Dehnungskoeffizienten aufweist, der um höchstens +/- 20 % besser jedoch nur um +/- 10 % von dem thermischen Dehnungskoeffizienten des keramischen Werkstoffs abweicht. Der Überzug aus Glas wird vorzugsweise aus einer Sollösung auf die keramische Fläche aufgetragen. Dies kann beispielsweise durch Tauchen oder Spritzen erfolgen. Zur Ausbildung des Überzuges wird vorzugsweise ein Glas verwendet, das 5 bis 20 Gew.% Natriumoxid, 30 bis 60 Gew.% Boroxid und 20 bis 60 Gew.% Siliziumoxid aufweist. Eine bevorzugte Glaszusammensetzung weist 12 Gew.% Natriumoxid, 48 Gew.% Boroxid sowie 40 Gew.% Siliziumoxid bezogen auf das Gesamtgewicht der pro cm² aufgetragenen Glasmenge auf. Zur Ausbildung der Sollösung werden organische Verbindungen, welche Natrium, Bor und Silizium enthalten in Wasser oder einem Alkohol, beispielsweise einem Propanol gelöst. Durch eine Wärmebehandlung wird das Lösungsmittel entfernt, wobei sich dann durch die Einwirkung des Luftsauerstoffs die gewünschte Glasverbindung einstellt. Das Fügen der keramischen und metallischen Flächen erfolgt während einer Wärmedruckbehandlung. Hierfür wird eine Temperatur gewählt, die mindestens 0,8 $T_m$ be-trägt, wobei $T_m$ der Schmelzpunkt des Metalls oder der Metallegierung in °K ist. Der Druck sollte mindestens 10 MPa betragen. Diese Temperatur und dieser Druck sollten einige Sekunden bis Minuten aufrecht erhalten werden.

Weitere erfindungswesentliche Merkmale sind in den Unteransprüchen gekennzeichnet.

Das erfindungsgemäße Verfahren wird nachfolgend anhand von Zeichnungen erläutert.

Es zeigen:

Figur 1: Ein Bauteil, zusammengefügt aus einem keramischen und einem metallischen Bauelement,

Figur 2: eine elektrochemische Speicherzelle.

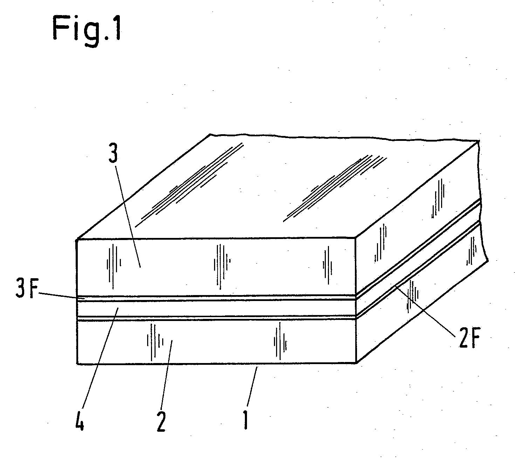

Das in Figur 1 bereichsweise dargestellte Bauteil 1 wird durch zwei Bauelemente 2 und 3 gebildet, die zusammengefügt sind. Das Bauelement 2 ist aus Keramik gefertigt, während das Bauelement 3 aus einem Metall oder einer Metall-Legierung hergstellt ist. Bei dem hier dargestellten Ausführungsbeispiel ist das Bauelement 3 aus Aluminium gefertigt. Um die beiden Bauelemente 2 und 3 erfindungsgemäß zusammenfügen zu können, ist auf die Oberfläche 2F des Bauelementes 2, die mit der Fläche 3F des Bauelementes 3 dauerhaft zusammengefügt werden soll, ein Überzug 4 aus Glas aufgetragen. Das Glas enthält als wesentliche Bestandteile 12 Gew.% Natriumoxid, 48 Gew.% Boroxid sowie 40 Gew.% Siliziumoxid. Die Beschichtung des Bauelementes 2 wird zunächst durch eine Sollösung gebildet. Hierfür werden organische Verbindungen des Natriums, des Bors und des Siliziums in Wasser oder Alkohol gelöst. Vorzugsweise wird zur Solbildung Natriummethylat sowie Bor- und Siliziummethylat verwendet. Als Lösungsmittel wird bevorzugt Propanol benutzt. Die Anteile an Alkoholaten und Lösungsmittel werden so gewählt, daß der Überzug 4 später die gewünschte Zusammensetzung des Glases aufweist. Durch Tauchen oder Spritzen wird die zu verbindende Oberfläche 2F des Bauelementes 2 so mit dem Sol beschichtet, daß später ein Überzug 4 mit einer Dicke zwischen 0,1 bis 100 μm vorzugsweise zwischen 1 und 10 μm erzielt wird. Bei dem hier dargestellten Ausführungsbeispiel weist der Überzug 4 eine Dicke von 10 μm auf. Nach dem Beschichten der Oberfläche des Bauelementes 2 mit dem Sol wird das Bauelement einer Wärmebehandlung bei einer Temperatur zwischen 500 und 1000 °C unterzogen, um das Lösungsmittel zu verdampfen und die organischen Bestandteile des Sols zu pyrolisieren. Das sich bildende Glas wird dabei in die Oberfläche des keramischen Werkstoffes eingebrannt. Nach der Wärmebehandlung bleibt der gewünschte Überzug 4 aus Glas auf der Oberfläche 2F des Bauelementes 2 zurück und weist die geforderte Dicke sowie die gewünschte Zusammensetzung auf. Anschließend wird das Bauelement 3 auf den Überzug 4 aufgesetzt. Zur Verbindung der beiden Bauelemente 2 und 3 werden diese nunmehr einer definierten Temperatur und einem vorgegebenen Druck ausgesetzt. Die Temperatur liegt oberhalb von 500 °C und der Druck beträgt mindestens 10 MPa. Diese Druckwärmebehandlung wird einige Sekunden bis Minuten aufrechterhalten. Während dieser Zeit werden die beiden Bauelemente dauerhaft über ihre gesamten miteinander zu verbindenden Flächen 2F und 3F zusammengefügt. Mögliche Oxidschichten, die sich auf der Oberfläche 3F des Bauelementes 3 gebildet haben, werden in dem Überzug 4 aus Glas gelöst, so daß ein komplettes Fügen der aufeinandergesetzten Flächen 2F und 3F möglich ist. Nach der Druckwärmebehandlung ist das Bauteil 1 fertiggestellt. Diese oben beschriebene Verbindung von Aluminium und Keramik kann auch mit anderen Metall-Legierungen bzw. Metallen und Ke-ramikwerkstoffen durchgeführt werden. Die Glaszu-sammensetzung für den Überzug 4 soll in jedem Fall 5 bis 20 Gew.% Natriumoxid, 30 bis 60 Gew.% Boroxid und 20 bis 60 Gew.% Siliziumoxid aufweisen. Die Temperatur sollte für das Fügen minde-stens 0,8 · $T_m$ betragen, wobei $T_m$ die Schmelz-temperatur in °K der metallischen Fügefläche 3F ist. Der Druck sollte beim Fügen mindestens 10 MPa betragen und zusammen mit der obengenannten Temperatur einige Sekunden bis Minuten aufrechterhalten werden.

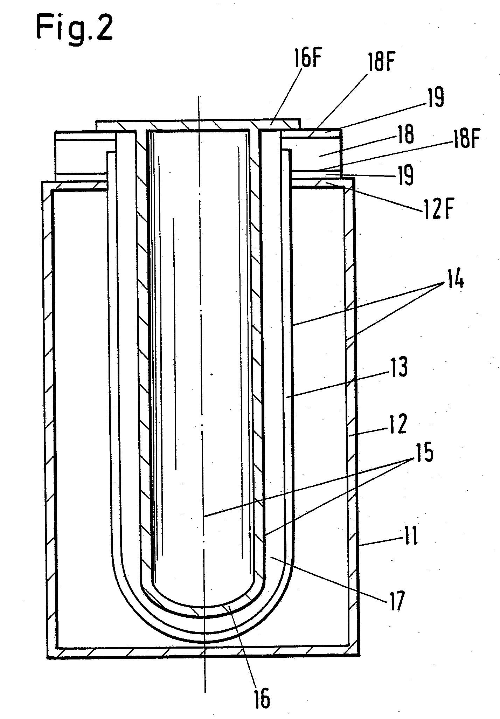

Eine konkrete Anwendung des erfindungsgemäßen Verfahrens wird anhand der in Figur 2 dar-gestellten elektrochemischen Speicherzelle 11 er-läutert. Diese wird nach außenhin durch ein becherförmiges Gehäuse 12 begrenzt, innerhalb dessen ein ebenfalls becherförmig ausgebildeter Festelektrolyt 13 angeordnet ist. Die Abmessungen des Festelektrolyten 13 sind so gewählt, daß zwischen seinen Außenflächen und den Innenflächen des Gehäuses 12 ein zusammenhängender Zwischenraum 14 verbleibt, der als Kathodenraum dient. Das Innere des Festelektrolyten 13 wird als Anodenraum 15 genutzt. In ihn ist eine Kartusche 16 eingesetzt, die das Natrium enthält. Dieses fließt aus einer Öffnung an der Unterseite der Kartusche (hier nicht dargestellt) in einen Spalt 17 zwischen der Kartusche 16 und der Innenfläche des Festelektrolyten 13. Am oberen offenen Ende des Festelektrolyten 13 ist ein nach außen gerichteter, als Flansch dienender Isolierring 18 angeglast. Der Isolierring 18 ist bei dem hier dargestellten Ausführungsbeispiel der Speicherzelle 11 aus Alphaaluminiumoxid gefertigt. Auf die Ober- und Unterseite dieses Isolierrings 18 ist jeweils ein Überzug 19 aus Glas aufgetragen. Das Glas weist eine Zusammensetzung von 12 Gew.% $Na_2O$, 48 Gew.% $B_2O_3$ sowie 40 Gew.% $SiO_2$ auf. Die Überzüge 19 werden auf den Isolierring 18 in gleicher Weise aufgetragen und ausgebildet, wie es für das bei dem in Figur 1 dargestellten Bauteil 1 beschrieben ist. Nach dem Anglasen des Isolierrings 18 an den Festelektrolyten erfolgt eine dauerhafte Verbindung des Gehäuses 12 mit dem Isolierring 18.

Bei dem hier dargestellten Ausführungsbeispiel ist das Gehäuse 12 aus Aluminium gefertigt und weist an seinem oberen offenen Ende einen nach innen weisenden Flansch 12F auf. Auf diesen ist der Isolierring 18 des Festelektrolyten 3 aufgesetzt. Die in dem Festelektrolyten 13 angeordnete Kartusche 16 weist einen Flansch 16F auf, der nach außen gerichtet ist. Die Lange dieses Flansches 16F ist so bemessen, daß er über den nach oben weisenden Rand des Festelektrolyten 13 nach außen übersteht und etwa bis zur Mitte des Isolierringes 18 geführt ist. Der Flansch 16F der Kartusche 16 ist aus einem Metall gefertigt, das den elektrischen Strom gut leitet und zudem gegen die korrosiven Einwirkungen des Natriums beständig ist. Dies ist insbesondere deshalb erforderlich, da mit Hilfe des Flansches 16F der Spalt 17 nach außenhin gasdicht verschlossen ist.

Der Flansch 12F des Gehäuses 12 und der Flansch 16F der Kartusche 16 sind durch Thermokompression mit dem Isolierring 18 des Festelektrolyten dauerhaft verbunden. Durch die auf der Ober- und Unterseite des Isolierrings 18 angeordneten Überzüge 19 werden Metalloxide, die sich auf der Ober- bzw. Unterseite der Flansche 12F und 16F gebildet haben, beim Verbinden mit dem Isolierring 18 in den Überzügen 19 gelöst. Hierdurch wird eine dauerhafte Verbindung zwischen dem Isolierring 18 und den Flanschen 12F und 16F erzielt.

## Ansprüche

1. Verfahren zum Verbinden von keramischen und metallischen Werkstoffen, dadurch gekennzeichnet, daß die keramische Fügefläche (2F, 18F) vor dem Verbinden mit der metallischen Fügefläche (3F, 12F und 16F) wenigstens bereichsweise mit einem Überzug (4,19) aus einem Glas überzogen wird, und daß daraufhin die Verbindung der beiden Fügeflächen (2F und 3F bzw. 18F und 12F, 16F) während einer Druck- und Wärmebehandlung durchgeführt wird.

2. Verfahren nach Anspruch 1, dadurch gekennzeichnet, daß auf die keramische Fügefläche (2F, 18F) ein Überzug (4, 19) aus Glas aufgetragen wird, dessen thermischer Dehnungskoeffizient um höchstens +/- 20 %, vorzugsweise nur +/- 10 %, von dem thermischen Dehnungskoeffizienten der keramischen Fügefläche (2F, 18F) abweicht.

3. Verfahren nach einem der Ansprüche 1 oder 2, dadurch gekennzeichnet, daß auf die keramische Fügefläche (2F, 18F) ein Überzug (4,19) aus Glas aufgetragen wird, dessen Transformationstemperatur unterhalb der Temperatur liegt, die beim Fügen angewendet wird.

4. Verfahren nach einem der Ansprüche 1 bis 3, dadurch gekennzeichnet, daß auf die keramische Fügefläche (2F, 18F) ein Überzug (4,19) aus Glas mit einer Dicke zwischen 0,1 und 100 $\mu$m, vorzugsweise zwischen 1 und 10 $\mu$m aufgetragen wird.

5. Verfahren nach einem der Ansprüche 1 bis 4, dadurch gekennzeichnet, daß vor dem Verbinden auf die keramische Fügefläche (2F, 18F) ein Überzug (4,19) aus Glas aufgetragen wird, der 5 bis 20 Gew.% Natriumoxid, 30 bis 60 Gew.% Boroxid und 20 bis 60 Gew.% Siliziumoxid aufweist.

6. Verfahren nach einem der Ansprüche 1 bis 5, dadurch gekennzeichnet, daß das Verbinden der keramischen Fügefläche (2F, 18F) mit der metallischen Fügefläche (3F, 12F, 16F) bei einer Temperatur von mindestens 0,8 • $T_m$ und einem Druck von mindestens 10 MPa durchgeführt wird, wobei $T_m$ die Schmelztemperatur in °K der metallischen Fügefläche (3F, 12F, 16F) ist, und daß dieser Druck und diese Temperatur mindestens im Bereich von Sekunden bis Minuten aufrechterhalten werden.

7. Verfahren zur Herstellung einer elektrochemischen Speicherzelle auf der Basis von Natrium und Schwefel mit einem Anodenraum (15) und einem Kathodenraum (14), die durch einen becherförmigen Festelektrolyten (13) voneinander getrennt und von einem metallischen Gehäuse (12) nach außenhin begrenzt sind, wobei der Festelektrolyt (13) an seinem oberen offenen Ende einen nach außen gerichteten Isolierring (18) aufweist, der mit Verschlußelementen (12F und 16F) dauerhaft verbunden ist, dadurch gekennzeichnet, daß der Isolierring (18) aus Alphaaluminiumoxid gefertigt und vor dem Verbinden mit den Verschlußelementen (12F und 16F) mit einem Überzug (19) aus Glas auf mindestens einer seiner Fügeflächen (18F) versehen wird, und daß die Verschlußelemente (12F und 16F) direkt über den Überzug (19) mit dem Isolierring (18) verbunden werden.

8. Verfahren nach einem der Ansprüche 1 bis 7, dadurch gekennzeichnet, daß der Überzug (4,19) aus einer Sollösung aufgetragen wird, die organische Natrium-, Bor- und Siliziumverbindungen enthält, die in Wasser oder Alkohol gelöst werden, daß die Sollösung durch Tauchen oder Spritzen auf die keramische Fügefläche (2F,18F) des Isolierrings (18) aufgetragen wird, und daß zur Bildung des Überzuges (4,19) das Lösungsmittel bei einer Temperatur zwischen 500 und 1000 ° verdampft und der Überzug (4,19) dauerhaft mit dem Isolierring (18) verbunden wird.

# Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 660 063 (H.A. CHRISTOPHER) * Anspruch 2; Spalte 1, Zeilen 68-73; Spalte 2, Zeile 16-21; Spalte 3, Zeilen 23-32 * | 1-4,8 | C 04 B 37/02 H 01 M 10/39 H 01 M 2/08 |
| A | --- | 5,6 | |
| Y | DE-C- 967 189 (SIEMENS-SCHUCKERTWERKE AG) * Anspruch 1 * | 1-4,8 | |
| X | --- GB-A-2 083 943 (BROWN, BOVERIE & CIE AG) * Ansprüche 1,8,14; Figur; Beispiel; Seite 1, Spalte 2, Zeilen 100-104 * | 7 | |
| Y | | 2 | |
| A | --- | 5 | |
| A | US-A-2 015 484 (J.E. LILIENFELD) * Anspruch 1; Seite 2, Spalte 1, Zeilen 60-72 * | 1,5 | |
| | ----- | | |

| RECHERCHIERTE SACHGEBIETE (Int. Cl.4) |
|---|
| C 04 B 37/00 H 01 M 10/00 H 01 M 2/00 |

Der vorliegende Recherchenbericht wurde für alle Patentansprüche erstellt

| Recherchenort | Abschlußdatum der Recherche | Prüfer |
|---|---|---|
| DEN HAAG | 20-01-1989 | HAUCK, H.N. |